# EUROPEAN PATENT SPECIFICATION

(11) **EP 1 408 928 B1**
(45) Date of publication and mention of the grant of the patent: **04.04.2012**
(21) Application number: 02759165.0
(22) Date of filing: 23.07.2002
(51) Int. Cl.: A01N 25/34, A01N 25/10, A01N 31/10, A01N 41/04, B32B 27/04, B44C 5/04, C08L 61/28

(54) **ANTIMICROBIAL MELAMINE RESIN AND PRODUCTS MADE THEREFROM**
ANTIMIKROBIELLES MELAMINHARZ UND DARAUS HERGESTELLTE PRODUKTE
RESINE DE MELAMINE ANTIMICROBIENNE ET PRODUITS A BASE DE RESINE DE MELAMINE

(30) Priority: 25.07.2001 US 307710 P
(43) Date of publication of application: 21.04.2004
(73) Proprietor: MICROBAN PRODUCTS COMPANY, Huntersville, NC 28078 (US)
(72) Inventor: HANRAHAN, William, D., Charlotte, NC 28216 (US); ONG, Ivan, W., Charlotte, NC 28210 (US); PARIANO, Laurie, J., Charlotte, NC 28269 (US)
(74) Representative: Chung, Hsu Min
(86) International application number: PCT/US2002/023184
(87) International publication number: WO 2003/009827

(56) References cited:
- JP-A- 06 198 607
- US-A- 6 071 542
- US-B1- 6 248 342
- US-B1- 6 248 342
- DATABASE WPI Section Ch, Week 198736 Derwent Publications Ltd., London, GB; Class A93, AN 1987-252498 XP002342315 & JP 62 172129 A (KAJIMA CORP) 29 July 1987 (1987-07-29) -& DATABASE EPODOC EUROPEAN PATENT OFFICE, THE HAGUE, NL; XP002341265 & JP 62 172129 A (KAJIMA CORP) 29 July 1987 (1987-07-29)
- "DERWENT CPI REGISTRY COMPOUNDS, INSTRUCTION MANUAL No. 2E" January 1987 (1987-01), DERWENT PUBLICATIONS , LONDON, UK , XP002341264 * entry 1614: Triclosan *
- DATABASE WPI Section Ch, Week 199608 Derwent Publications Ltd., London, GB; Class A21, AN 1996-073680 XP002342316 & JP 07 329265 A (NITTO BOSEKI CO LTD) 19 December 1995 (1995-12-19)

## Description

### BACKGROUND OF THE INVENTION

### 1) Field of the Invention

The present invention concerns an antimicrobial melamine resin useful in making surface coatings and decorative laminates particularly for countertops, flooring, tabletops, desktops, and molded products such as molded dinnerware, picnic dishes, and cups, as well as surface treatments for textile and paper. More particularly, the present invention concerns the addition to melamine resin of an antimicrobial agent, which is capable of quickly and uniformly dispersing within the resin and exhibits antimicrobial properties for the life of the melamine layer.

### 2) Prior Art

Melamine resins are well known and were first synthesized in 1834 by Liebig. Prior to about 1940, these resins were more a laboratory curiosity than a commercial product. Today, melamine resin is widely used for surface coatings and decorative laminates. Paper based laminates are sold under the trade names of Formica® and Micarta®. These types of coatings or decorative laminates are formed from photographic prints or decorative sculptured paper impregnated with melamine resin and placed on a core material and cured in a large press. The kraft paper impregnated with the melamine resin is very compatible with the melamine resin and costs less than multiple layers of impregnated paper.

Melamine resins have the hardest surface of any commercial material. This hard surface along with excellent grease and water resistance, low flammability, and clarity of the plastic has led to the usefulness of melamine formaldehyde as countertop material. These countertop materials are thin sheets composed of heavy paper or thin cardboard backing that is bonded to the backside of a patterned paper. The bonding material is usually phenolic, which may be foamed, but is not thick. The top layer of paper is impregnated with melamine formaldehyde. The laminate is heated and subjected to pressure to attain a complete cure. The material generally is between two to four millimeters thick, up to about two meters in width, and sold as a roll in lengths. The roll sheet is then adhesively bonded to a wooden base to make countertop, flooring, furniture, etc.

The melamine resin is compatible with a wide variety of fillers and has been used for many molded parts because of the hard surface that results. Many products such as molded dinnerware, plastic dishes, and cups are made from the melamine resin which is hard, stain-resistant, and relatively low cost.

Prego® flooring is a ready to use (no sanding and no urethaning) laminated flooring system having a top layer of melamine formaldehyde that is heated under pressure to fuse to a wood layer. The top layer is a wear layer that is space age tough and yet transparent so that it allows the wood grain to show through.

Although melamine resin, and its uses such as with Formica® or dinnerware, etc., are well known to those skilled in the art, making melamine resin having antimicrobial properties is quite difficult.

Despite the difficulty, there is a need in the industry to create tabletops, countertops, dinnerware, and flooring, all of which could be used either in a residential or commercial setting. More specifically, a restaurant having Formica® tabletops, countertops in the kitchen, and flooring throughout the restaurant, all of which exhibit antimicrobial properties, would be desirable and would reduce the chances of contamination from salmonella, E. coli, and other bacteria and fungi. Melamine resins are very hard, producing surfaces from melamine resins that have permanent antimicrobial characteristics, as opposed to a topical treatment that only has a temporary and very short-lived duration, has heretofore been unknown. Additionally, certain classes of antimicrobial agents are compatible or react with the melamine such that they are incorporated into the resin and no longer exhibit antimicrobial properties.

Peroxide has been identified as an antifungal and mildew proofing agent suitable for melamine resins in Japan publication JP 10-119221 filed October 16,1996 by Yozo Shioda. The peroxide is added at a concentration of 0.1 to 0.8 parts per 100 parts melamine. A problem associated with peroxide is that it rapidly degrades when heated, therein having shortened sustained antimicrobial properties. Additionally, at higher concentrations, the peroxide shortens the bath life of the melamine.

Antibacterial phosphates in combination with silver, benzalkonium, cety piridinium and isopropylmethylphenol has been described for use with melamine resins in Japan publication JP 07-329265 filed June 3,1994 by Kazuaki Tajima et aL for use in decorative laminates. The antibacterial phosphate along with silver, benzalkonium, cety piridinium and isopropylmethylphenol is added to the overlay sheet or the printed sheet, and to the underlying kraft paper which is impregnated with phenolic resins. The phosphates require a secondary antimicrobial, in part because phosphates are a food source for a number of elemental plants and animals (bacteria and fungi). An antimicrobial system that does not employ phosphates would be preferred, and especially an antimicrobial system that does not provide a source of nutrition for the bacteria or fungi. Furthermore, a preferred system would be one in which the antimicrobial is concentrated in the overlay sheet.

JP-A-62.172129 discloses construction materials for a sterile room, components of which are made from resins such as polyvinyl chloride in which triclosan is distributed as a sterilizing agent.

The need for dinnerware, picnic plates, cups, etc. also having antimicrobial properties exists for basically the same reasons given above with respect to surface countertops, tabletops and flooring, to create a melamine based resin having permanent antimicrobial properties such that the antimicrobial agent is capable of migrating through the very hard tough melamine resin, or is incorporated into the resin in such a manner that as the hard surface is abraded through normal wear and tear, newly exposed antimicrobial agent continuously renews the antimicrobial properties.

US-B-6,248,342 discloses an antimicrobial high-pressure laminate with a melamine surface layer in which is dispersed an inorganic antibiotic metal containing composition. The present invention provides an antimicrobial melamine resin composition comprising: a melamine formaldehyde resin or alkylated melamine formaldehyde resin and an antimicrobial agent comprising triclosan in a dispersion which is substantially inert with respect to the melamine resin and is present within the melamine resin in an amount effective to provide antimicrobial properties.

Effective antimicrobial agents are preferably those that have a relatively low vapour pressure. Triclosan, which is a diphenyl ether (bis-phenyl) derivative, having the scientific name of 2,4,4'-trichloro-2'-hydroxydiphenyl ether, is a particularly efficacious agent. It has a vapour pressure of 4 x 10⁻⁴ mm at 20°C. On the other hand, ortho phenyl phenol, (a.k.a. OPP-CAS No. 90-43-7), which has a boiling point of ∼280°C is generally considered too volatile in the instant invention, except in applications necessitating superior resistance to bio-fouling. The combination of OPP and triclosan have been found to exhibit synergistic effects, and in products having a melamine formaldehyde coating where anti-bio fouling properties are required, the use of OPP can be justified. In a preferred embodiment of the invention, the antimicrobial(s) are delivered as a fine divided powder diluted in a liquid forming the dispersion. The dispersion is admixed with the melamine formaldehyde resins prior to the application of the resins. The dispersion is preferably 15% to 65% solids by weight, and commonly 50% by weight, of the active antimicrobial. Zinc oxide can be added to the dispersion to stabilize the antimicrobial, and in particular zinc pyrithiones. The preferred weight percent addition of the antimicrobial is 0.1 to 5%, with a more preferred range of 0.3 to 1.0% based on the weight of the melamine resin.

In a typical application, such as forming a melamine formaldehyde based decorative laminate (i.e. flooring or countertop) the laminate is comprised of a high density core which is at least one layer of fiberboard, to which is adhered a melamine-formaldehyde impregnated printed paper sheet, and onto which is adhered a melamine-formaldehyde impregnated overlay sheet. The impregnated printed paper is patterned to have the desired design, which in the instant case, is for counters or simulated wood. Commonly, the printed paper sheet and the overlay sheet are pre-impregnated with the melamine formaldehyde coating at least several days prior to forming the laminate. The fiberboard is usually impregnated with a phenolic or melamine resin. The pre-impregnation of the printed paper and the overlay enables the melamine formaldehyde sufficient time to thoroughly wet-out the substrate, which in turn drives out any remaining entrapped air. The melamine-formaldehyde is usually applied as a compounded resin/water or resin/water/solvent(s) saturate. Solvent(s) that are commonly used in melamine formaldehyde compositions are usually rather complex mixtures or more than one solvent, and include aromatics such as toluene, xylene and Solvesso 150® an aromatic blend by Exxon; alcohols such as butanol, isobutanol, methanol, ethanol, isopropanol; esters such as cellosolve acetate, ethyl acetate isopropyl acetate; ketones such as isophorone, methyl ethyl ketone, acetone; alcohol amines such as dimethyl ethanol amine, dimethyl isopropanol amine; and ethers such as butyl cellosolve. The use of solvents generally is reserved for impregnating difficult to saturate paper. Certain grades of kraft paper are either too dense, or too hydrophobic or a combination of the two to be saturated to a sufficient level of pick up to achieve the desired properties with a pure water borne system. More open porous paper sheets can be saturated with water/ latex systems, which generally have the advantage of a lower raw material cost.

Compounding additives, in addition to the antimicrobial, include surface active agents such as wetting agents, surfactants, de-aeratants, and defoamers; anti-blocking agents, catalysts such as PTSA (para toluene sulfonic acid), MSA (methane sulfonic acid), oxalic acid, ammonium nitrate and ammonium chloride; fillers; pigments; dielectric modifiers; glossing agents; and dyes. Latent acid catalysts, such as those having a fugitive counter ion, like ammonium nitrate and ammonium chloride, are preferred where the storage time will be lengthy. Generally speaking the strong acid catalysts are only used in melamine formaldehyde systems where the melamine is highly methylated, such as hexamethoxymethylmelamine. The antimicrobial dispersion can be used with melamine, and alkylated melamines such as methylated melamines, butylated melamines, isobutylated melamines, and melamines containing imino resins such as methylated imino resins, butylated imino resins, isobutylated imino resins; and urea resins such as methylated urea resins, butylated urea resins, isobutylated urea resins formaldehyde resins; benzoguanamine resins and glycoluril resins.

Following saturation the carrier (e.g. water and / or solvent) is dried off leaving the sheet saturated with the compounded melamine formaldehyde amine. It has been found that the antimicrobial only need be added to the overlay to impart antimicrobial properties to the laminate. While it is anticipated that migration into the printed paper layer occurs, antimicrobial, and in particular bactericidal performance remains efficacious at the 0.1 wt. % on melamine level. The laminate is formed by combining the overlay, the printed paper and the fiberboard in a heated press. Typical cure times are 15 seconds to several minutes at 127 °C to 290 °C. Pressures are on the order of 6.89 to 34.5 mPa (1000 psi to 5000 psi).

Antimicrobial agents can also be added directly to melamine formaldehyde resins, wherein the melamine formaldehyde resin is being used as a surface coating, on countertops, flooring, tabletops, etc., the antimicrobial agent of the present invention is incorporated into the bath through which the kraft paper passes, for example. When the melamine formaldehyde resin is employed to make molded articles such as dinnerware, cups, chopping blocks, etc., the antimicrobial agent is incorporated directly into the melamine molding resin.

Because the antimicrobial agent is capable of reacting with the melamine formaldehyde resin, it must consequently first be blended such that it is virtually encapsulated in a carrier that is compatible with melamine formaldehyde. This carrier containing antimicrobial agent is added to the melamine formaldehyde either in the bath when making solid surface materials or within the resin itself when compressed.

The present invention also pertains to products made from melamine resin having the antimicrobial agent incorporated therein. In the broadest sense, the present invention relates to an article, such as dinnerware, cups, glasses, flooring, countertops, tabletops, and cutting boards, which exhibit permanent antimicrobial properties during the useful life of such articles.

Melamine (C₃H₆N₆) is a white crystalline solid. Combining it with formaldehyde results in the formation of a compound referred to as methylol derivative. With additional formaldehyde (CH₂O) the melamine reacts to form tri-, tetra-, penta-, and hexamethylolmelamine. While commercial melamine resins may be obtained without the use of catalyst, both heating and catalyst are used to speed polymerization and curing. The reaction of the melamine with the formaldehyde is a condensation reaction with water as a byproduct. The curing of melamine resins is quickened by the use of heat and acid catalyst, while the overall pH is still neutral or slightly alkaline. The addition of acid catalyst provides a source for protons, but the level of addition is generally kept lower than alkalinity produced by the amines. Additionally, the melamine formaldehyde resin may contain fillers, plasticizers, dielectric modifiers, pigments or dyes, and glossing agents. When the resin is molded, the temperature range is generally between 154-171°C and under pressure in a compression mold from 13.8 to 34.5 mPa (2000 to 5000 psi).

Decorative laminates are usually assembled with a core of several sheets of phenolic or melamine resin impregnated kraft paper. The core is surfaced with a melamine formaldehyde impregnated sheet, which is often printed with a decorative design. Finally, a thin melamine resin-impregnated overlay sheet is applied. The sheets are impregnated by being passed through a resin bath, and followed by controlled moisture drying.

The melamine formaldehyde containing the dispersion of antimicrobial agent is incorporated into the saturating bath through which the paper passes. The bath is recirculated to keep the dispersion equally distributed. A typical melamine formaldehyde saturant will have a viscosity of 300 to 600 centipoise. The percent solids is 55% to 58%. The pH is 9.3 to 9.8. The bath is long enough such that there is a dwell time of approximately 1 minute. The overlay sheet is a 43 lb (70 gsm) to 50 lb (80 gsm) sheet 278·7m² (3000 sq ft) ream, which is saturated with 64.5 lb (105 gsm) to 68 lb (110 gsm) of resin (dry). The weight percent addition of the antimicrobial is 0.1 to 5%, with a preferred range of 0.3 to 1.0 wt% on the melamine resin. The target weight percent of dry triclosan on melamine is 0.75%. Following saturation, the sheet is partially dried removing most of the dilution water. A similar saturation process is used on the impregnated printed paper sheet. The overlay, the printed paper sheet and the high density core fiberboard are assembled and laminated in a press at pressures ranging from 6·89 to 10·34 mPa (1000 to 1500 psi), at temperatures ranging from 170 to 210°C with a preferred temperature of 190 °C. The resulting laminate is mar resistant to detergents, acids, alcohols, oils and greases, and has antimicrobial properties throughout its entire life.

In a variation on the above described first embodiment, a second high density core fiberboard is formed, which is impregnated with melamine resin, and assembled and laminated to the first embodiment

In a variation on the above described second embodiment, a rubberized pad is assembled and laminated to the bottom of the second high density core fiberboard.

Generally during curing, formaldehyde is released from melamine formaldehyde resin. Formaldehyde itself is a good antibacterial agent. However, when the curing is completed, insufficient amounts of formaldehyde are released and with time the amount released is smaller and smaller such that it simply has no antimicrobial effect, particularly after about one year as a molded article or in a surface material. The present invention relates to the incorporation of an antimicrobial agent in the melamine formaldehyde resin such that it always has antimicrobial properties throughout its entire life. The incorporation is effected through the addition of a dispersion of the antimicrobial agent to the melamine formaldehyde resin. The melamine resin is coated / saturated onto an overlay sheet used in a laminate. Following coating, dilution water and / or solvent is dried off, leaving the overlay impregnated with uncured melamine resin containing at least one antimicrobial. The overlay is combined with other sheets under heat and pressure, to form the laminate. The antimicrobial agent, which is concentrated in the overlay of the laminate imparts protective antimicrobial properties to the laminate for the life of the melamine coating.

## Claims

1. An antimicrobial melamine resin composition comprising: a melamine formaldehyde resin or alkylated melamine formaldehyde resin and an antimicrobial agent comprising triclosan in a dispersion which is substantially inert with respect to the melamine resin and is present within the melamine resin in an amount effective to provide antimicrobial properties.

2. An antimicrobial resin composition according to claim 1 wherein the content of the antimicrobial agent is from 0.1% to 5% of the weight of the resin.

3. An antimicrobial resin composition according to claim 2 wherein the content of the antimicrobial agent is from 0.3% to 1.0% of the weight of the resin.

4. An antimicrobial resin composition according to any preceding claim wherein the antimicrobial agent comprises a combination of triclosan and ortho-phenyl phenol.

5. An antimicrobial resin composition according to any preceding claim wherein said resin is selected from melamine, methylated melamines, butylated melamines, and isobutylated melamines.

6. An antimicrobial resin composition according to any preceding claim wherein the melamine resin contains an imino resin.

7. An antimicrobial resin composition according to claim 6 wherein said imino resin is a methylated, butylated or isobutylated imino resin.

8. A decorative laminate having antimicrobial characteristics comprising: an overlay sheet impregnated with an antimicrobial melamine resin composition according to any preceding claim;
a printed paper sheet impregnated with a melamine formaldehyde, and
a high density core fibreboard impregnated with a phenolic or melamine resin.

9. A decorative laminate according to claim 8 further comprising a second high density core fibreboard impregnated with a phenolic or melamine resin.

10. A method for forming an antimicrobial laminate comprising the antimicrobial melamine resin composition as claimed in any one of claims 1 to 11, said method comprising the steps of:
providing a dispersion of the antimicrobial agent,
adding the dispersion to the melamine resin,
coating or saturating an overlay sheet with the melamine resin,
drying the coated or saturated overlay sheet, and combining the overlay with other sheets under heat and pressure to form a laminate.

11. A method as claimed in claim 10, wherein a printed paper sheet and the overlay sheet are impregnated with the melamine resin.

## Patentansprüche

1. Antimikrobielle Melaminharz-Zusammensetzung umfassend: ein Melamin-Fomaldehyd-Harz oder alkyliertes Melamin-Formaldehyd-Harz und einen antimikrobiellen Wirkstoff umfassend Triclosan in einer Dispersion, welche im Wesentlichen im Bezug zu dem Melaminharz inert ist und innerhalb des Melaminharz in einer Menge vorliegt, welche effektiv ist, um antimikrobielle Eigenschaften bereitzustellen.

2. Antimikrobielle Harz-Zusammensetzung nach Anspruch 1, wobei der Inhalt des antimikrobiellen Wirkstoffes von 0,1% bis 5% des Gewichtes von dem Harz ist.

3. Antimikrobielle Harz-Zusammensetzung nach Anspruch 2, wobei der Inhalt des antimikrobiellen Wirkstoffes von 0,3% bis 1,0% des Gewichtes von dem Harz ist.

4. Antimikrobielle Harz-Zusammensetzung nach einem der vorhergehenden Ansprüche, wobei der antimikrobielle Wirkstoff eine Kombination aus Triclosan und Orthophenylphenol umfasst.

5. Antimikrobielle Harz-Zusammensetzung nach einem der vorhergehenden Ansprüche, wobei das Harz ausgewählt ist aus Melamin, methylierten Melaminen, butylierten Melaminen und isobutylierten Melaminen.

6. Antimikrobielle Harz-Zusammensetzung nach einem der vorhergehenden Anspruche, wobei das Melaminharz ein Iminoharz enthält.

7. Antimikrobielle Harz-Zusammensetzung nach Anspruch 6, wobei das Imino-Harz ein methyliertes, butyliertes oder isobutyliertes Imino-Harz ist.

8. Dekoratives Laminat, welches antimikrobielle Eigenschaften aufweist, umfassend: eine Auflagefolie, welche mit einer antimikrobiellen Melaminharz-Zusammensetzung nach einem der vorhergehenden Ansprüchen imprägniert ist; eine bedruckte Papierbahn, welche mit einem Melamin-Formaldehyd imprägniert ist, und eine Faserplatte mit einem Kern hoher Dichte, welche mit einem Phenol- oder Melaminharz imprägniert ist.

9. Dekoratives Laminat nach Anspruch 8 weiter umfassend eine zweite Faserplatte mit einem Kern hoher Dichte, welche mit einem Phenol- oder Melaminharz imprägniert ist.

10. Verfahren zur Bildung eines antimikrobiellen Laminats umfassend die antimikrobielle Melaminharz-Zusammensetzung wie in einem der Ansprüche 1 bis 11 beansprucht, das Verfahren umfasst die Schritte:
Bereitstellen einer Dispersion aus dem antimikrobiellen Wirkstoff, Zugabe der Dispersion zu dem Melaminharz, Beschichten oder Sättigen einer Auflagefolie mit dem Melaminharz, Trocknen der beschichteten oder gesättigten Auflagefolie und Kombination der Auflage mit anderen Folien unter Hitze und Druck, um ein Laminat zu bilden.

11. Verfahren wie in Anspruch 10 beansprucht, wobei eine bedruckte Papierbahn und die Auflagefolie mit dem Melaminharz imprägniert werden.

## Revendications

1. Composition de résine de mélamine anti-microbienne comprenant : une résine mélamine-formaldéhyde ou résine mélamine-formaldéhyde alkylée et un agent anti-microbien comprenant du triclosan dans une dispersion qui est substantiellement inerte vis-à-vis de la résine de mélamine et qui est présent dans la résine de mélamine en une quantité efficace pour conférer des propriétés anti-microbiennes.

2. Composition de résine anti-microbienne suivant la revendication 1, dans laquelle la quantité d'agent anti-microbien va de 0,1 % à 5 % du poids de la résine.

3. Composition de résine anti-microbienne suivant la revendication 2, dans laquelle la quantité d'agent anti-microbien va de 0,3 % à 1,0 % en poids du poids de la résine.

4. Composition de résine anti-microbienne suivant l'une quelconque des revendications précédentes, dans laquelle l'agent anti-microbien comprend une association de triclosan et d'orthophénylphénol.

5. Composition de résine anti-microbienne suivant l'une quelconque des revendications précédentes, dans laquelle ladite résine est choisie entre la mélamine, des mélamines méthylées, des mélamines butylées et des mélamines isobutylées.

6. Composition de résine anti-microbienne suivant l'une quelconque des revendications précédentes, dans laquelle la résine de mélamine contient une résine à fonction imino.

7. Composition de résine anti-microbienne suivant la revendication 6, dans laquelle ladite résine à fonction imino est une résine à fonction imino méthylée, butylée ou isobutylée.

8. Stratifié décoratif ayant des caractéristiques anti-microbiennes, comprenant : une feuille de recouvrement imprégnée d'une composition de résine de mélamine anti-microbienne suivant l'une quelconque des revendications précédentes ;
une feuille de papier imprégnée de mélamine-formaldéhyde, et
un panneau de fibres intérieur haute densité imprégné d'une résine phénolique ou résine de mélamine.

9. Stratifié décoratif suivant la revendication 8, comprenant en outre un second panneau de fibres intérieur haute densité imprégné d'une résine phénolique ou résine de mélamine.

10. Procédé pour former un stratifié anti-microbien comprenant la composition de résine de mélamine anti-microbienne suivant l'une quelconque des revendications 1 à 11, ledit procédé comprenant les étapes consistant :
à fournir une dispersion de l'agent anti-microbien,
à ajouter la dispersion à la résine de mélamine,
à revêtir ou saturer une feuille de recouvrement avec la résine de mélamine,
à sécher la feuille de recouvrement revêtue ou saturée, et à combiner la feuille de recouvrement avec d'autres feuilles à chaud et sous pression pour former un stratifié.

11. Procédé suivant la revendication 10, dans lequel une feuille de papier imprimée et la feuille de recouvrement sont imprégnées de la résine de mélamine.
